# EUROPEAN PATENT APPLICATION

(11) **EP 4 813 756 A1**
(43) Date of publication of application: **30.09.2026**
(21) Application number: 25191813.2
(22) Date of filing: 25.07.2025
(51) Int. Cl.: B60R 16/02, H02G 3/00

(54) **CONDUCTOR MOUNTING STRAP**

(30) Priority: 27.03.2025 US 202563778593 P; 23.07.2025 US 202519278072
(71) Applicant: Aptiv Manufacturing Management Services GmbH, 8200 Schaffhausen (CH)
(72) Inventor: SIEGFRIED, David, 8200 Schaffhausen (CH); SUDIK JR., Joseph, 8200 Schaffhausen (CH); MICHAEL, Jeffrey, 8200 Schaffhausen (CH); PETERSON, David R., 8200 Schaffhausen (CH); VANSUCH, Stephen, 8200 Schaffhausen (CH); DEAN, Robert L., 8200 Schaffhausen (CH)
(74) Representative: Bardehle Pagenberg Partnerschaft mbB Patentanwälte Rechtsanwälte

(57) **Abstract**

An apparatus (100) includes an elongate base (102) formed of an electrically insulative material, the base being configured to couple to a conductor (110) and to substantially conform to the conductor's shape along its longitudinal axis. A first mounting tab (104) extends from the base (102) and is configured to couple the base (102) to a substrate. This configuration enables secure attachment of the base (102) to the substrate while providing electrical insulation and close conformity with the conductor's shape.

## Description

The subject matter disclosed herein relates to mounting strap configured for coupling, i.e., attaching, a conductor to a substrate.

Flat flexible cables (FFCs) are electrical cables made of a flexible plastic film base with one or more flat metallic conductors which may be arranged parallel to one another. FFCs are advantageous in certain applications, for example in the automotive industry, because they require less packaging space than traditional round wire cables. FFCs are typically held in place by mounting clips, such as fir tree fasteners.

Various methods have been developed to secure FFCs to substrates. Traditional approaches often involve the use of metal clips or brackets, which are designed to hold conductors in place. These metal components are typically attached to the substrate using screws or bolts, providing a secure but sometimes cumbersome solution. The rigidity and weight of metal can also pose challenges in certain applications, particularly where flexibility or weight reduction is desired.

Another approach has employed integrated mounting solutions, where the FFC itself is designed with features that allow it to be directly attached to a substrate. These systems can reduce the number of components required for installation but may limit the flexibility of application of the FFC. Furthermore, the integration of mounting features into the FFC can complicate the manufacturing process and increase costs.

Yet another approach involves special assembly board fixturing to hold the FFC and routing clip(s) in their desired locations while an assembly operator manually spot tapes or bonds the mounting clip(s) to the FFC. However, this approach has been found to be costly and hard to automate.

One more approach involves injection molding channels (or half channels) for the FFCs that include mounting clip features integrally formed with the channels. The channels are then attached to the FFC for mounting and rigid support, e.g., by spot taping the channel to the FFC. This approach has also been found to be costly and hard to automate.

However, none of these approaches have provided a comprehensive solution that combines the features described in this disclosure.

Mounting straps are presented herein that are configured for attachment of conductors, such as flat flexible cables (FFCs) to a substrate, such as a vehicle panel. The mounting straps may also be configured to provide enhanced rigidity of the FFC, if needed. The mounting straps may be thin plastic straps that are cut from a sheet of plastic material, e.g., polyproprelene or polyamide, to provide mounting features and mounting tabs for push pins, edge clips, or studs. The mounting straps may be attached to one or both sides of the FFC, preferably using an adhesive. The adhesive may be applied to the mounting strap either before or after stamping so that the cable mounting strap can be bonded to the FFC, thereby providing a low profile finished cable assembly. Attachment tabs may be intergally formed with the strap to allow a wraparound option for enhanced retention of the mounting strap to the FFC. Design of the mounting strap may provide unique thickness profile, e.g., for containment of more than one FFC. The attachment tabs may be incorporated into the mounting features for increased rigidity and retention. Breakout positions can be added with either attached or loose fold over clips.

Mounting straps are presented herein that are configured for attachment of conductors, such as flat flexible cables (FFCs) to a substrate, such as a vehicle panel. The mounting straps may also be configured to provide enhanced rigidity of the FFC, if needed. The mounting straps may be thin plastic straps that are cut from a sheet of plastic material, e.g., polypropylene or polyamide, to provide mounting features and mounting tabs for push pins, edge clips, or studs. The mounting straps may be attached to one or both sides of the FFC, preferably using an adhesive. The adhesive may be applied to the mounting strap either before or after stamping so that the cable mounting strap can be bonded to the FFC, thereby providing a low profile finished cable assembly. Attachment tabs may be integrally formed with the strap to allow a wraparound option for enhanced retention of the mounting strap to the FFC. Design of the mounting strap may provide unique thickness profile, e.g., for containment of more than one FFC. The attachment tabs may be incorporated into the mounting features for increased rigidity and retention. Breakout positions can be added with either attached or loose fold over clips.

The cable mounting straps described herein provide the following benefits:
- Adjustable thickness for various rigidity requirements and/or cost targets.
- Reduced tooling on cable assembly boards using fixed position of clips and/or mounting points in support.
- Custom outline stamping for straight, right-angled, or other desired mounting strap shapes.
- Wrap around features for variable thickness mounting to secure multiple FFCs.
- Bonding the FFC to the mounting strap using thin film adhesives or applied adhesives (single or double sided).
- Spacer features for fold over FFC harness designs (crease protection).
- A design that allows automated processing without the need for injection molding. (stamping, clip insertion, and adhesive application may be automated).
- Breakout features can be applied or integrated into the mounting strap.

In some aspects, the techniques described herein relate to an apparatus, including: an elongate base including an electrically insulative material, the base configured to be coupled to a conductor and further configured to substantially conform with a shape of the conductor along a longitudinal axis of the conductor; and a first mounting tab extending from the base configured to couple the base to a substrate.

In some aspects, the techniques described herein relate to an apparatus, including: a breakout clip including an electrically insulative material having an angled portion configured to fold an electrical cable such that a first portion of the electrical cable extends in a different angular direction than a second portion of the electrical cable.

In some aspects, the techniques described herein relate to a mounting device configured coupling a flat electrical cable to a substrate, including: an elongate base; and a first mounting tab integral with the base and extending from the base.
**FIG.** 1 is an isometric view of a flat flexible cable with an attached cable mounting strap according to some embodiments.
**FIGs. 2A, 2B, and 2C** are isometric top views in a sequence of assembling a cable mounting strap to a flat flexible cable according to some embodiments.
**FIGs. 3A, 3B, and 3C** are isometric bottom views in the sequence of assembling the cable mounting strap to the flat flexible cable according to some embodiments.
**FIGs. 4A, 4B, and 4C** are isometric top views in a sequence of assembling a cable mounting strap with wraparound tabs to a flat flexible cable according to some embodiments.
**FIGs. 5A, 5B, and 5C** are isometric bottom views in the sequence of assembling the cable mounting strap with wraparound tabs to the flat flexible cable according to some embodiments.
**FIG. 6** is an isometric view of a cable mounting strap including wraparound tabs according to some embodiments.
**FIG. 7** is an isometric view of a cable mounting strap including features for folding and bending a flat flexible cable according to some embodiments.
**FIG. 8** is an isometric view of a cable mounting strap including other features for folding and bending a flat flexible cable according to some embodiments.
**FIGs. 9A and 9B** are isometric views of breakout clips including features for folding and bending a flat flexible cable according to some embodiments.
**FIG. 10** is an isometric view of a cable mounting strap including the breakout clip of **FIG. 9A** according to some embodiments.
**FIG. 11A** is an isometric top view of a cable mounting strap including an integral breakout clip according to some embodiments.
**FIG. 11B** is an isometric bottom view of the cable mounting strap of **FIG. 11A** according to some embodiments.
**FIG. 12A** is an isometric top view of a breakout clip according to some embodiments.
**FIG. 12B** is an isometric top view of the breakout clip of **FIG. 12A** attached to a cable mounting strap according to some embodiments.
**FIG. 13A** is an isometric bottom view of the breakout clip of **FIG. 12A** according to some embodiments.
**FIG. 13B** is an isometric top view of the breakout clip of **FIG. 12A** attached to the cable mounting strap according to some embodiments.

The present disclosure provides a conductor mounting strap configured for coupling attaching a conductor, such as a flat flexible electrical cable, to a substrate, such as an automobile panel.

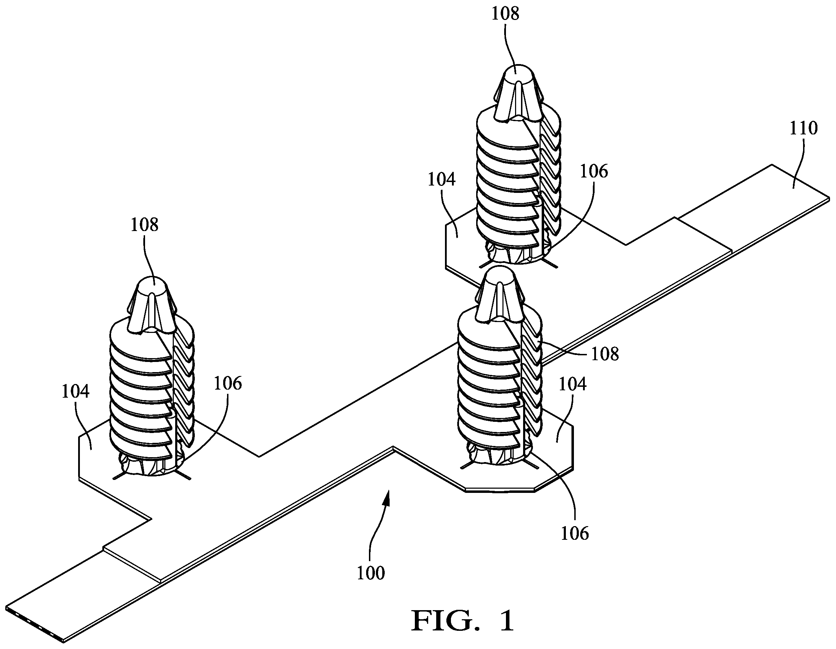

**FIG. 1** is an isometric view of a first example of a mounting strap 100. The mounting strap 100 includes an elongate base 102 that is formed of an electrically insulative material, e.g., polypropylene or polyamide. The mounting strap 100 also includes a plurality of mounting tabs 104 extending from the base 102. The mounting tabs 104 may be used to attach the mounting strap 100 to a substrate (not shown). In the example of **FIG. 1****,** the mounting tabs 104 define apertures 106 wherein fir tree fasteners 108 may be inserted to secure the mounting strap 100 to the substrate. The fir tree fasteners 108 are configured to be inserted within a hole in the substrate, thereby attaching the mounting strap 100 to the substrate. In other embodiments, the mounting strap 100 may be secured to the substrate by other means, for example, push pins, threaded studs, or edge clips received within the apertures 106 of the mounting tabs 104.

In this example, the base is attached to a flat flexible cable, hereafter referred to as FFC 110, along a longitudinal axis X of FFC 110. Base 102 may be further configured to substantially conform with the shape of FFC 110.

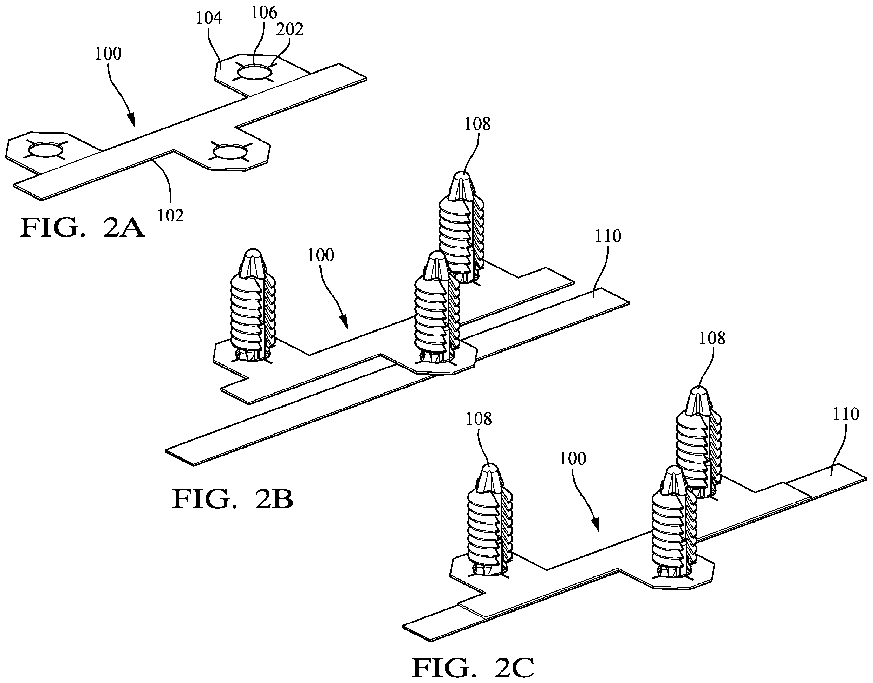

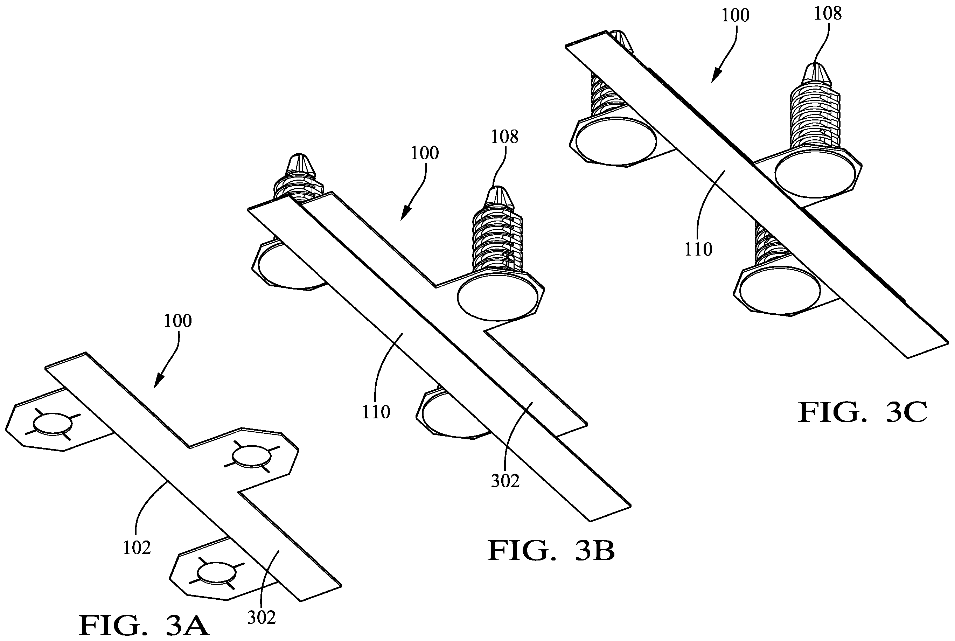

**FIGs. 2A-2C** show isometric top views of a sequence of assembling the mounting strap 100 to FFC 110 and **FIGs. 3A-3C** show isometric bottom views of the sequence of assembling the mounting strap 100 to FFC 110.

**FIGs. 2A** and **3A** show the mounting strap 100 isolated from FFC 110. The mounting strap 100 in this example is substantially flat and is formed by cutting the mounting strap 100 from a flat sheet of polymeric material using a process such as stamping, milling, laser cutting, water jet cutting, etc. Cutting the mounting strap 100 from a sheet provides advantages in material properties and cost over injection molding. The mounting strap 100 may have a consistent thickness as depicted here or the thickness of the base 102 and the mounting tabs 104 may vary if needed for particular applications of the mounting strap 100. The mounting tabs 104 may define relief slits 202 in the mounting tabs 104 around the apertures 106 to facilitate insertion of the fir tree fasteners 108 through the apertures 106. Although the mounting strap 100 illustrated in **FIGs. 1A** to **3C** is substantially flat, i.e., planar, other embodiments may be envisioned in which the mounting strap is curved and or twisted to accommodate specific mounting applications.

**FIGs. 2B** and **3B** show the mounting strap 100 prior to attachment with FFC 110 with the fir tree fasteners 108 installed within the apertures 106. As shown in **FIG. 3B****,** an adhesive layer 302 may be applied to the back side of base 102 to secure FFC 110 to base 102. The adhesive layer 302 may be applied as a liquid, a paste, or a thin film double-sided tape. The adhesive layer 302 may be applied to the base 102 before or after the mounting strap 100 is cut from the sheet. In some embodiments, the adhesive layer 302 may be covered by a removeable protective layer until FFC 110 is attached to base 102.

**FIGs. 2C** and **3C** show the mounting strap 100 attached to FFC 110.

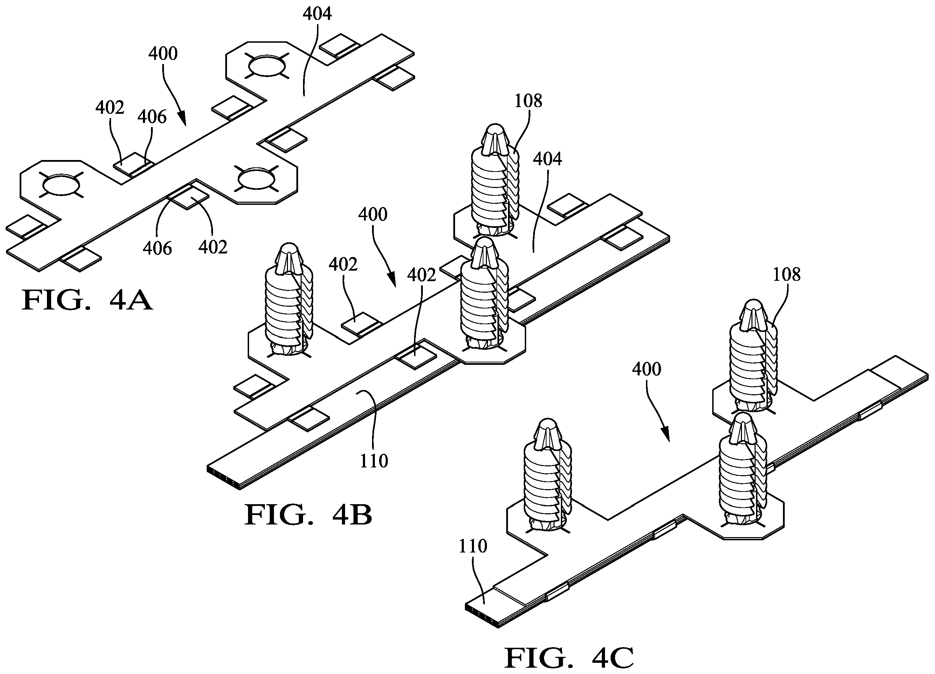

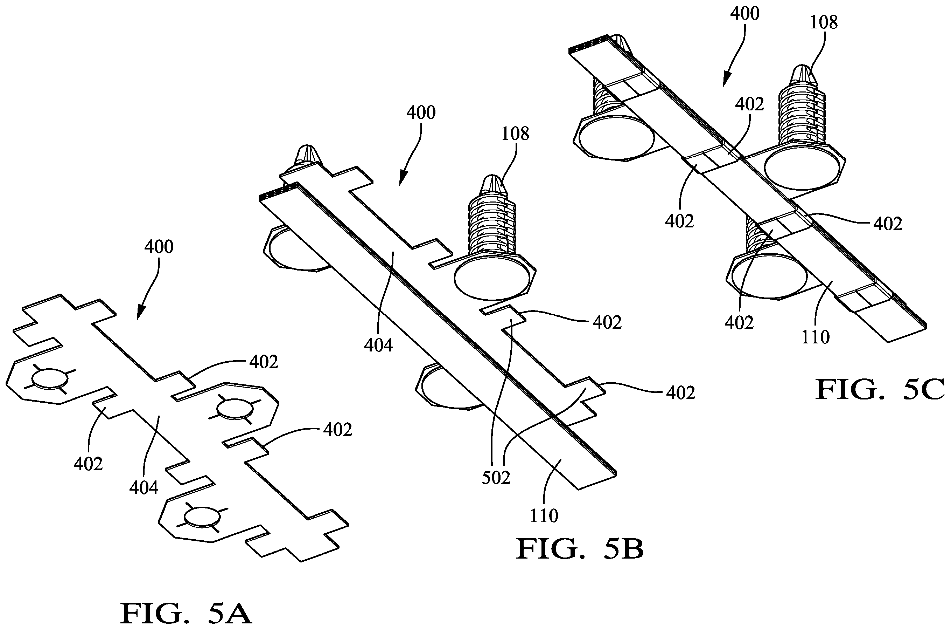

**FIGs. 4A** to **4C** show isometric top views of another example of a mounting strap 400 similar to the mounting strap 100 and a sequence of assembling the mounting strap 400 to an FFC 110. **FIGs. 5A** to **5C** show isometric bottom views of the sequence of assembling the mounting strap 400 to FFC 110. The mounting strap 400 is similar to the mounting strap 100 with the addition of attachment tabs 402 that extend from base 404. These attachment tabs 402 are configured to be folded over FFC 110 as shown in FIG. 5C to retain FFC 110 to the mounting strap 400. These attachment tabs 402 may be used in place of an adhesive layer to attach FFC 110 to the mounting strap 400 or in addition to enhance the security of the attachment of FFC 110. As shown in **FIGs. 4A** and **4B****,** joints 406 between the attachment tabs 402 and base 404 may be scored to form a living hinge that facilitates folding the attachment tabs 402 over FFC 110. As shown in **FIG. 5B****,** an adhesive layer 502 may be applied to the back side of the attachment tabs 402 to secure the attachment tabs 402 to FFC 110. The adhesive layer 502 may be applied as a liquid, a paste, or a thin film double-sided tape. The adhesive layer 502 may be applied to the attachment tabs 402 before or after the mounting strap 400 is cut from the sheet. In some embodiments, the attachment tabs 402 may be covered by a removeable protective layer until the attachment tabs 402 are attached to FFC 110. In yet other embodiments, the attachment tabs may include interlocking features to secure the attachment tabs to one another.

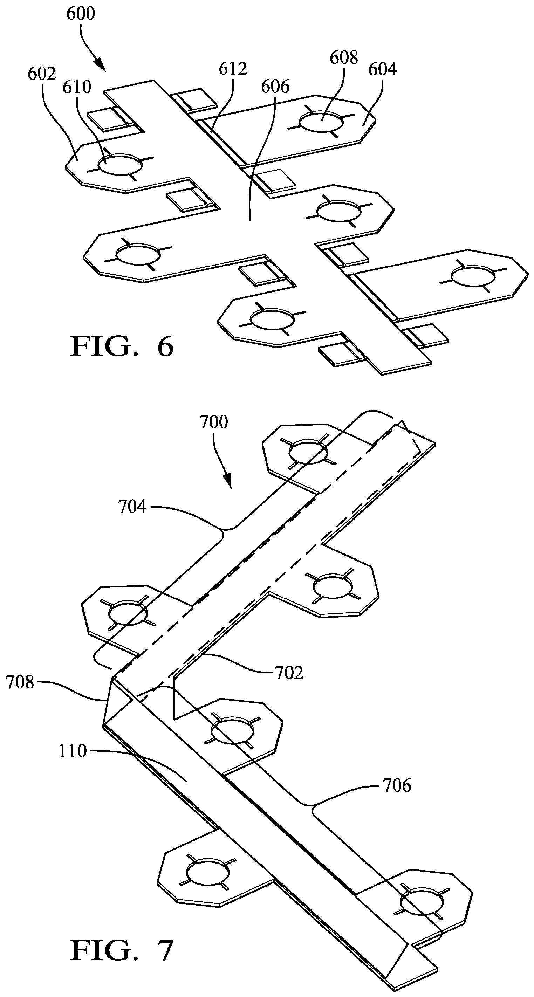

**FIG. 6** shows another example of a mounting strap 600, which is similar to mounting strap 400. The mounting tabs 602 of mounting strap 600 may have corresponding mounting tabs 604 that, similarly to the attachment tabs 402 of mounting strap 400, fold over FFC 110 to secure FFC 110 to the base 606 of the mounting strap 600. The corresponding mounting tabs 604 define corresponding apertures 608, that when the corresponding mounting tabs 604 are folded over FFC 110, align with the apertures 610 in the mounting tabs 602. A joint 612 between the corresponding mounting tabs 602 and the base 606 may be scored to form a living hinge that facilitates folding the corresponding mounting tabs 604 over FFC 110.

**FIG. 7** shows another example of a mounting strap 700, which is similar to mounting straps 100, 400, and 600. The base 702 of the mounting strap 700 has a first portion 704 that extends from a second portion 706 of the base with an angular offset. In the illustrated example of the mounting strap 700, the angular offset is 90°, however other angular offsets dictated by the specific application of the mounting strap 700 may be envisioned. Base 702 defines an angled portion 708 between the first portion 704 and the second portion 706 that is configured to fold FFC 110 so that it aligns with the longitudinal axis A of the first portion 704 as well as the longitudinal axis B of the second portion 706. Preferably, the angled portion 708 has an angular value θ that is half of the angular offset between the first portion 704 and the second portion 706. As shown in the example of FIG. 7, FFC 110 is attached to one side of the base 702 in the first portion 704 and an opposite side of the base 702 in the second portion 706.

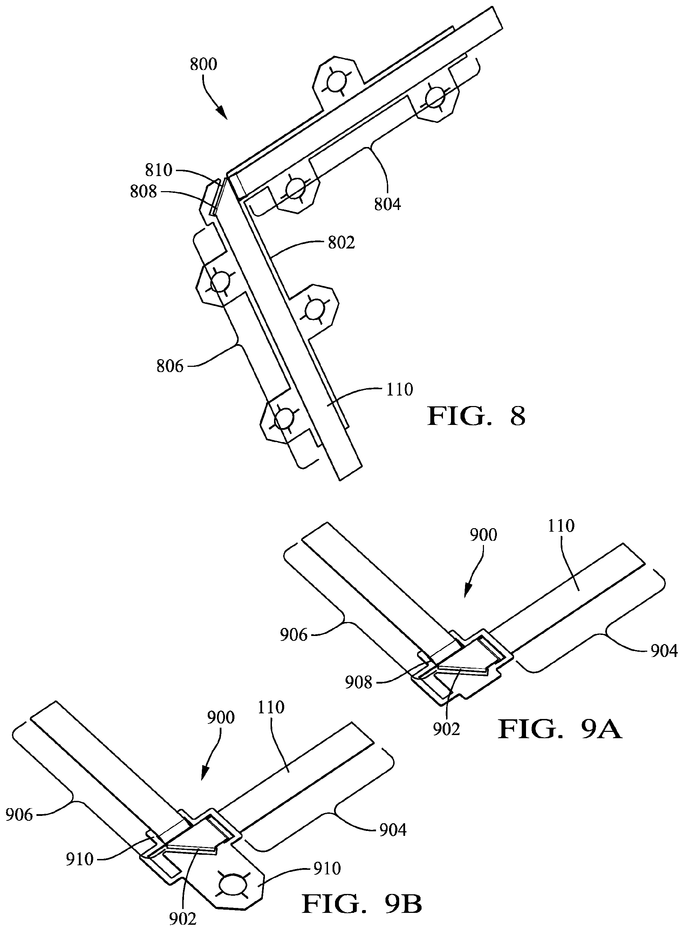

**FIG. 8** shows another example of a mounting strap 800, which is similar to the mounting strap 700. Base 802 of the mounting strap 800 has a first portion 804 that extends from a second portion 806 of the base with an angular offset. In the illustrated example of the mounting strap 800, the angular offset is 90°, however other angular offsets dictated by the specific application of the mounting strap 800 may be envisioned. Base 802 defines an angled portion 808 between the first portion 804 and the second portion 806 that is configured to fold FFC 110 so that it aligns with the longitudinal axis A of the first portion 804 as well as the longitudinal axis B of the second portion 806. Preferably, the angled portion 808 has an angular value θ that is half of the angular offset between the first portion 804 and the second portion 806. As shown in the example of **FIG. 8****,** base 802 also defies a slot 810 near the angled portion 808 through which FFC 110 is threaded such that FFC 110 is attached to the same side of the base 802 in the first portion 804 and in the second portion 806.

**FIG. 9A** is an isometric view of a breakout clip 900 including an angled portion 902 similar to the angled portion 808 of mounting strap 800 that is configured for folding and bending FFC 110 so that the first portion 904 of FFC 110 may extend in a different direction than the second portion 906 of FFC 110. The breakout clip 900 defines an angled portion 902 that is configured to fold FFC 110 so that the first portion 904 has an angular offset from the second portion 906. Preferably, the angled portion 902 has an angular value θ that is half of the angular offset between the first portion 904 and the second portion 906. As shown in the example of **FIG. 9A****,** breakout clip 900 also defies a slot 908 near the angled portion 902 through which FFC 110 is threaded. **FIG. 9B** is an isometric view of the breakout clip 900 which includes a mounting tab 910 which is similar in construction and functions as the mounting tab 104 of the mounting strap 100. The breakout clip 900 may also be advantageous manufactured by cutting the breakout clip 900 from a plastic sheet using the processes described for the mounting strap 100.

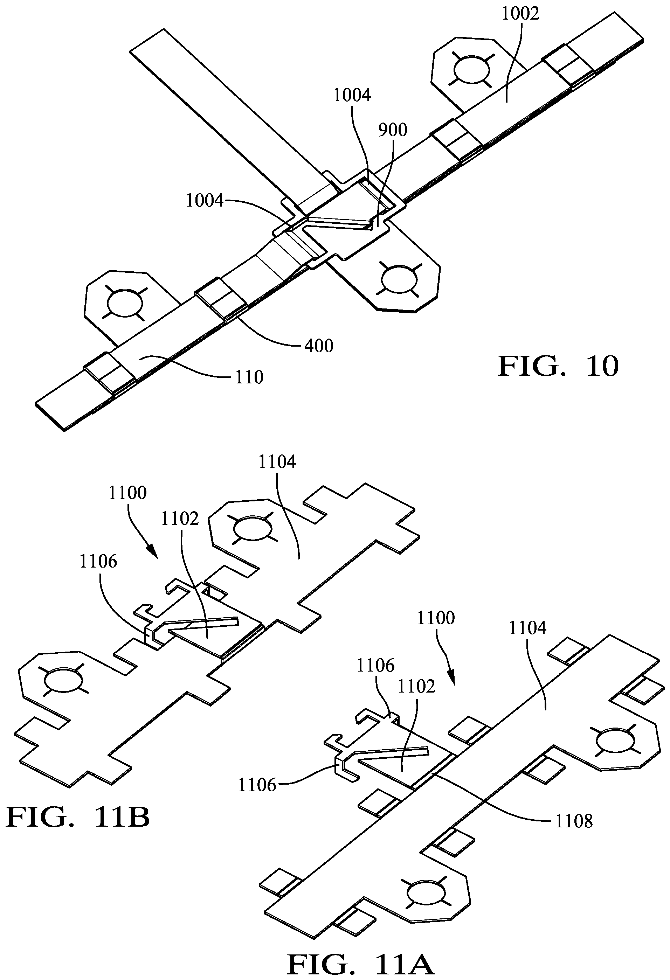

**FIG 10** shows an example assembly of the breakout clip 900 in combination with the mounting strap 400. This assembly has a first FFC 110 folded over the breakout clip 900 and a second FFC 1002 threaded through slots 1004 in the breakout clip 900 to secure the breakout clip 900 to the mounting strap 400.

**FIG. 11A** shows an isometric top view of another example of a mounting strap 1100 which is similar to the mounting strap 400 with the addition of an integral breakout clip 1102. As shown in the isometric bottom view of **FIG. 11B****,** the breakout clip 1102 is configured to fold over the base 1104 of the mounting strap 1100 and has two arms 1106 that are configured to grip the base 1104 and hold the breakout clip 1102 closed over FFC 110. A joint 1108 between the breakout clip 1102 and the base 1104 may be scored to form a living hinge that facilitates folding the breakout clip 1102 over FFC 110.

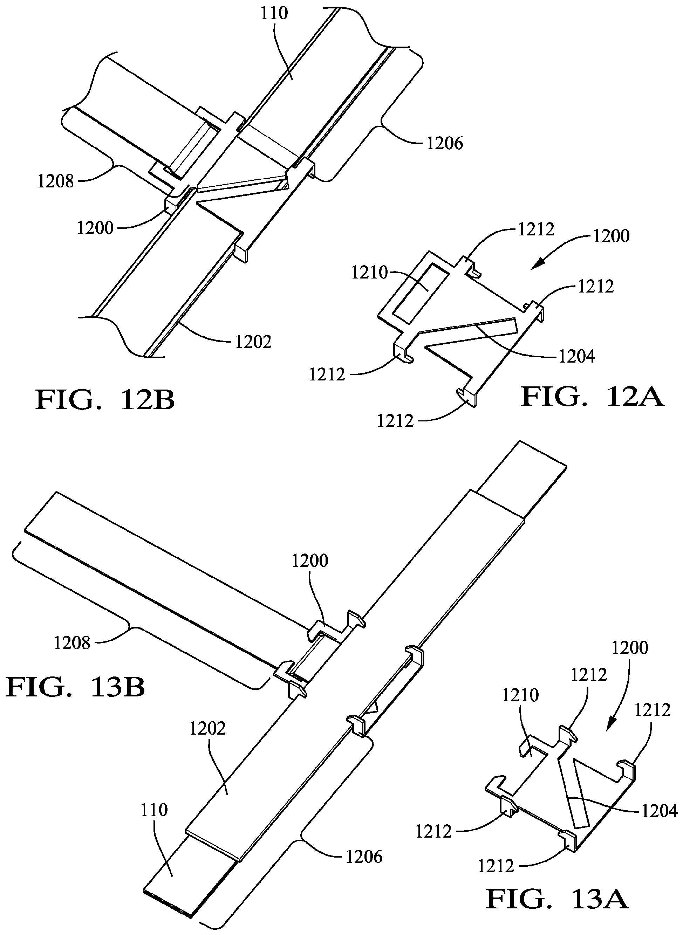

**FIG. 12A** shows an isometric top view of another example of a breakout clip 1200 similar to the breakout clip 900 and **FIG 12B** shows an isometric top view of the breakout clip 1200 assembled to a mounting strap 1202 for an FFC 110. **FIG. 13A** shows an isometric top view of the breakout clip 1200, and **FIG 13B** shows an isometric bottom view of the breakout clip 1200 assembled with to the mounting strap 1202. The breakout clip 1200 has an angled portion 1204 similar to the angled portion 902 of breakout clip 900 that is configured for folding and bending FFC 110 so that a first portion 1206 of FFC 110 may extend in a different direction than a second portion 1208 of FFC 110. The angled portion 1204 is configured to fold FFC 110 so that the first portion 1206 has an angular offset from the second portion 1208. Preferably, the angled portion 1204 has an angular value θ that is half of the angular offset between the first portion 1206 and the second portion 1208. As best shown in the example of **FIG. 12A****,** breakout clip 1200 also defies a slot 1210 near the angled portion 1204 through which FFC 110 is threaded. The breakout clip 1200 has four arms 1212 that are configured to grip the mounting strap 1202 and hold the breakout clip 1200 to the mounting strap 1202.

While the illustrated examples show mounting straps 100, 400, 700, 800, and 1100 being configured for use with flat flexible cables, other embodiments of the mounting strap may be envisioned that are configured for use with other elongate electrical conductors, such as flexible printed circuits or rigid bus bars. Yet other embodiments of the mounting strap may be configured for use with other elongated conductor types, such as fiber optic cables, pneumatic tubes, hydraulic tubes, or a hybrid combination of any of these types of conductors.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Further, features shown in one of the illustrated embodiments may be combined with features shown in another of the illustrated embodiments. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

### Discussion of Possible Embodiments

The following are non-exclusive descriptions of possible embodiments of the present invention.

In some aspects, the techniques described herein relate to an apparatus, including: an elongate base including an electrically insulative material, the base configured to be coupled to a conductor and further configured to substantially conform with a shape of the conductor along a longitudinal axis of the conductor; and a first mounting tab extending from the base configured to couple the base to a substrate.

The apparatus of the preceding paragraph can optionally include, additionally and/or alternatively any, one or more of the following features/steps, configurations and/or additional components.

In some aspects, the techniques described herein relate to an apparatus, wherein the electrical insulative material includes a polymeric material.

In some aspects, the techniques described herein relate to an apparatus, wherein the first mounting tab includes an aperture configured to receive a mounting stud.

In some aspects, the techniques described herein relate to an apparatus, further including a second mounting tab extending from the base opposite the first mounting tab configured to fold over the conductor to secure the base to the conductor, the second mounting tab defining a second aperture configured align with the aperture of the first mounting tab and receive the mounting stud.

In some aspects, the techniques described herein relate to an apparatus, wherein the first mounting tab is integrally formed with the base and coplanar with the base.

In some aspects, the techniques described herein relate to an apparatus, further including: an adhesive layer on the base configured to secure the base to the conductor.

In some aspects, the techniques described herein relate to an apparatus, further including attachment tabs extending from opposite sides of the base and configured to fold over the conductor to secure the base to the conductor.

In some aspects, the techniques described herein relate to an apparatus, wherein the attachment tabs are integrally formed with the base and co-planar with the base.

In some aspects, the techniques described herein relate to an apparatus, wherein the attachment tabs include an adhesive layer configured to secure the attachment tabs to the conductor.

In some aspects, the techniques described herein relate to an apparatus, wherein the attachment tabs include latching features configured to secure the attachment tabs to each other.

In some aspects, the techniques described herein relate to an apparatus, further including: a flat electrical cable having a plurality of wire conductors arranged parallel to one another and separated by a flat insulating layer to which the base is attached.

In some aspects, the techniques described herein relate to an apparatus, wherein a first portion of the base extends from a second portion of the base with an angular offset.

In some aspects, the techniques described herein relate to an apparatus, wherein the base includes an angled portion between the first portion and the second portion configured to fold the flat electrical cable.

In some aspects, the techniques described herein relate to an apparatus, wherein the angled portion has an angular value that is half of the angular offset between the first portion and the second portion.

In some aspects, the techniques described herein relate to an apparatus, wherein flat electrical cable is attached to one side of the base in the first portion and an opposite side of the base in the second portion.

In some aspects, the techniques described herein relate to an apparatus, wherein the second portion includes a slot through which the flat electrical cable extends and wherein the flat electrical cable is attached the same side of the base in the first portion and in the second portion.

In some aspects, the techniques described herein relate to an apparatus, wherein the angled portion includes an angular cutout between the first portion and the second portion.

In some aspects, the techniques described herein relate to an apparatus, further including: a breakout clip attached to the base and having an angled portion configured to fold the flat electrical cable such that a portion of the flat electrical cable extends away from the base.

In some aspects, the techniques described herein relate to an apparatus, wherein the breakout clip includes a slot through which the portion of the flat electrical cable extends away from the base.

In some aspects, the techniques described herein relate to an apparatus, including: a breakout clip including an electrically insulative material having an angled portion configured to fold an electrical cable such that a first portion of the electrical cable extends in a different angular direction than a second portion of the electrical cable.

The apparatus of the preceding paragraph can optionally include, additionally and/or alternatively any, one or more of the following features/steps, configurations and/or additional components.

In some aspects, the techniques described herein relate to an apparatus, wherein the electrical insulative material includes a polymeric material.

In some aspects, the techniques described herein relate to an apparatus, wherein the breakout clip includes a slot through which the first portion of the electrical cable extends away from the second portion.

In some aspects, the techniques described herein relate to an apparatus, further including: a mounting tab extending from the breakout clip configured to attach the electrical cable to a substrate.

In some aspects, the techniques described herein relate to an apparatus, wherein the mounting tab includes an aperture configured to receive a mounting stud.

In some aspects, the techniques described herein relate to a mounting device configured for coupling a flat electrical cable to a substrate, including: an elongate base; and a first mounting tab integral with the base and extending from the base.

The mounting device of the preceding paragraph can optionally include, additionally and/or alternatively any, one or more of the following features/steps, configurations and/or additional components.

In some aspects, the techniques described herein relate to a mounting device, wherein the mounting tab defines a first aperture configured to receive a mounting stud.

In some aspects, the techniques described herein relate to a mounting device, further including a second mounting tab integral with the base extending from the base opposite the mounting tab, wherein a second aperture is defined in the second mounting tab which is configured to fold over the flat electrical cable to secure the base to the flat electrical cable and align the second aperture with the first aperture of the first mounting tab.

In some aspects, the techniques described herein relate to a mounting device, further including an adhesive layer on the base.

In some aspects, the techniques described herein relate to a mounting device, further including a removeable protective layer over the adhesive layer.

In some aspects, the techniques described herein relate to a mounting device, further including attachment tabs extending from opposite sides of the base configured to fold over the flat electrical cable to secure the base to the flat electrical cable.

In some aspects, the techniques described herein relate to a mounting device, further including an adhesive layer on the attachment tabs.

In some aspects, the techniques described herein relate to an electrical cable assembly, including: one or more electrical cables having a plurality of wire conductors arranged parallel to one another that are separated by an insulating layer; and a mounting device coupled to the one or more electrical cables, the mounting device having an elongate base including an electrically insulative material and a first mounting tab extending from the base defining a first aperture.

The electrical cable assembly of the preceding paragraph can optionally include, additionally and/or alternatively any, one or more of the following features/steps, configurations and/or additional components.

In some aspects, the techniques described herein relate to an electrical cable assembly, wherein the mounting device further includes a second mounting tab defining a second aperture extending from the base opposite the first mounting tab, wherein the second mounting tab is folded over the one or more electrical cables, and wherein the second aperture is aligned with the first aperture of the mounting tab.

In some aspects, the techniques described herein relate to an electrical cable assembly, wherein the one or more electrical cables are coupled to the base by an adhesive layer between the one or more electrical cables and the base.

In some aspects, the techniques described herein relate to an electrical cable assembly, wherein the base includes attachment tabs extending from opposite sides of the base and wherein the attachment tabs are folded over the one or more electrical cables to secure the one or more electrical cables to the base.

In some aspects, the techniques described herein relate to an electrical cable assembly, wherein the attachment tabs include an adhesive layer and wherein the attachment tabs are attached to the one or more electrical cables using the adhesive layer.

In some aspects, the techniques described herein relate to an electrical cable assembly, wherein a first portion of the base extends from a second portion of the base with an angular offset and wherein the base includes an angled portion between the first portion and the second portion and wherein the one or more electrical cables are folded over the angled portion such that the electrical cable extends along the first portion and, with the angular offset, along the second portion.

In some aspects, the techniques described herein relate to an electrical cable assembly, wherein one or more electrical cables are attached to one side of the base in the first portion and an opposite side of the base in the second portion.

In some aspects, the techniques described herein relate to an electrical cable assembly, wherein the second portion includes a slot through which the one or more electrical cables extend and wherein the one or more electrical cables are attached to the same side of the base in the first portion and in the second portion.

In some aspects, the techniques described herein relate to an electrical cable assembly, further including a breakout clip including an angled portion attached to the base, wherein one of the electrical cables is folded such that a portion of the one of the electrical cables extends away from the other electrical cables with an angular offset.

## Claims

1. An apparatus (100, 400, 600, 700, 800, 1100), comprising:
an elongate base (102, 404, 606, 702, 802, 1104) comprising an electrically insulative material, the base (102, 404, 606, 702, 802, 1104) configured to be coupled to a conductor (110) and further configured to substantially conform with a shape of the conductor (110) along a longitudinal axis of the conductor; and
a first mounting tab (104, 602) extending from the base (102, 404, 606, 702, 802, 1104) configured to couple the base (102, 404, 606, 702, 802, 1104) to a substrate.

2. The apparatus (600) according to claim 1, further comprising:
a second mounting tab (604) extending from the base (606) opposite the first mounting tab (602) configured to fold over the conductor (110) to secure the base (606) to the conductor (110), the second mounting tab (604) defining a first aperture (610) configured align with second aperture (608) in the first mounting tab (602) and receive a mounting stud.

3. The apparatus (100, 400) according to claim 1 or 2, further comprising:
an adhesive layer (302, 502) on the base (102, 404) configured to secure the base (102, 404) to the conductor.

4. The apparatus (400, 1100) according to any one of the preceding claims, further comprising:
attachment tabs (402) extending from opposite sides of the base (404, 1104) and configured to fold over the conductor (110) to secure the base (404, 1104) to the conductor (110).

5. The apparatus (400, 1100) according to claim 4, wherein the attachment tabs (402) comprise an adhesive layer configured to secure the attachment tabs (402) to the conductor (110).

6. The apparatus (400, 1100) according to claim 4 or 5, wherein the attachment tabs (402) comprise latching features configured to secure the attachment tabs (402) to each other.

7. The apparatus (100, 400, 600, 700, 800, 1100) according to any one of the preceding claims, the conductor (110) further comprising:
a flat electrical cable (110) having a plurality of wire conductors arranged parallel to one another and separated by a flat insulating layer to which the base (102, 404, 606, 702, 802, 1104) is attached.

8. The apparatus (700, 800) according to claim 7, wherein a first portion (704, 804) of the base (702, 802) extends from a second portion (706, 806) of the base (702, 802) with an angular offset.

9. The apparatus (700, 800) according to claim 8, wherein the base (702, 802) comprises an angled portion (708, 808) between the first portion (704, 804) and the second portion (706, 806) configured to fold the flat electrical cable (110).

10. The apparatus (800) according to claim 9, wherein the angled portion (808) comprises an angular cutout between the first portion (804) (704) and the second portion (806).

11. The apparatus (1100) according to any one of claims 7 to 10, further comprising:
a breakout clip (1102, 1200) attached to the base (1104, 1202) and having an angled portion (1204) configured to fold the flat electrical cable (110) such that a portion of the flat electrical cable (110) extends away from the base (1202).

12. The apparatus according to claim 11, wherein the breakout clip (1104, 1202) comprises a slot (1210) through which the portion of the flat electrical cable (110) extends away from the base (1104, 1202).

13. An apparatus (900, 1200), comprising:
a breakout clip (900, 1200) comprising an electrically insulative material having an angled portion (902, 1204) configured to fold an electrical cable such that a first portion (904, 1206) of the electrical cable (110) extends in a different angular direction than a second portion (1208) (906, 1208) of the electrical cable (110).

14. The apparatus (900, 1200) according to claim 13, wherein the breakout clip (900, 1200) comprises a slot (908, 1210) through which the first portion (904, 1206) of the electrical cable (110) extends away from the second portion (906, 1208) of the electrical cable (110).

15. The apparatus (900) according to claim 13 or 14, further comprising a mounting tab (910) extending from the breakout clip (900) configured to attach the electrical cable (110) to a substrate.
